# EUROPÄISCHE PATENTSCHRIFT

(11) **EP 2 524 637 B1**
(45) Veröffentlichungstag und Bekanntmachung des Hinweises auf die Patenterteilung: **18.06.2014**
(21) Anmeldenummer: 12168061.5
(22) Anmeldetag: 15.05.2012
(51) Int. Cl.: A47J 31/46, A47J 31/00

(54) **Getränkeautomat**
Beverage machine
Automate à boissons

(30) Priorität: 20.05.2011 DE 102011076214
(43) Veröffentlichungstag der Anmeldung: 21.11.2012
(73) Patentinhaber: WMF WÜRTTEMBERGISCHE METALLWARENFABRIK AG, 73309 Geislingen/Steige (DE)
(72) Erfinder: Startz, Armin, 89197 Weidenstetten (DE)
(74) Vertreter: BRP Renaud & Partner

(56) Entgegenhaltungen:
- WO-A2-2009/130661
- WO-A2-2011/151703
- US-A1- 2008 063 772

## Beschreibung

Die vorliegende Erfindung betrifft einen Getränkeautomaten, insbesondere einen Kaffeevollautomaten, mit einem durch eine Heizeinrichtung führenden Hauptstrompfad und einem die Heizeinrichtung umgehenden Nebenstrompfad gemäß dem Oberbegriff des Anspruchs 1. Solch ein Getränkeautomat ist aus dem Dokument US 2008/063772 bekannt.

Im Getränkeautomaten werden das notwendige Brühwasser, Tee oder auch Aufguss-Mixgetränke in Heizeinrichtungen erhitzt, die meist auf eine bestimmte Temperatur eingestellt sind. Diese Temperatur wird z.B. in einem Boilersystem als Solltemperatur eingestellt oder durch das System vorgegeben (z.B. Wasser in einem Durchlauferhitzersystem innerhalb eines Dampfkessels). Um eine gleichbleibend hohe Qualität des Getränks garantieren zu können, sollte die optimale Brühwassertemperatur für das Getränk individuell ausgegeben werden können, wozu prinzipiell drei bekannte Möglichkeiten bestehen: Die erste Möglichkeit besteht darin, das Brühwasser auf die kleinste erforderliche Temperatur zu erwärmen und dann getränkebezogen die Systemtemperatur kurzzeitig anzuheben oder durch einen nachgeschalteten "Booster" (kleiner Durchlauferhitzer) das Getränk auf die Solltemperatur anzuheben. Eine zweite Möglichkeit besteht darin, das Brühwasser auf einem höheren oder dem höchsten notwendigen Brühtemperaturniveau im Erhitzersystem bereitzustellen und dann durch Zumischen von kaltem Wasser die gewünschte Brühtemperatur einzustellen. Die dritte Möglichkeit besteht darin, das ganze Erhitzersystem produktbezogen sehr schnell zu erwärmen, wobei dies jedoch nur bei vergleichsweise kleinen Ausgabemengen sinnvoll erscheint. Üblicherweise wird die zweite Möglichkeit verwendet, das heißt kaltes Wasser zum eigentlichen Erhitzersystem zugeführt und dadurch die Temperatur geregelt. Hierbei wird in einem Nebenpfad entweder eine Blende oder ein Magnetventil angeordnet, welches bei Bedarf den Nebenpfad freigibt und dadurch kühles Wasser um die Heizeinrichtung zum Getränkeauslass fließen lässt. Nachteilig an den genannten Systemen ist, dass nicht genau bekannt ist, welcher Fluss sich über den Hauptpfad (Heizeinrichtung) und den Nebenpfad (Blende/Ventil) einstellt, da der Druckunterschied in beiden Pfaden annähernd gleich hoch ist. Der sich einstellende Fluss ist neben dem eigentlichen Querschnitt der beiden Pfade von der Fließgeschwindigkeit, der Hydrodynamik des Gesamtsystems sowie der Viskosität des Mediums abhängig. Die sich einstellende Fließgeschwindigkeit wiederum variiert stark in Abhängigkeit der nachgeschalteten Brüheinrichtung, bzw. in welcher Phase der Zubereitung sich das System gerade befindet (Brühstart, Preinfusion, Brühende, ...). Weiter verändert sich natürlich auch die Fließgeschwindigkeit in dem jeweiligen Pfad, sofern dieser komplett, beispielsweise durch ein Ventil, abgeschaltet wird. Auch bergen unbekannte und unkontrollierbare Einflüsse der Hydrodynamik hohe Unsicherheiten bezüglich einer einzustellenden Mischtemperatur.

Die vorliegende Erfindung beschäftigt sich daher mit dem Problem, für einen Getränkeautomaten der gattungsgemäßen Art eine verbesserte oder zumindest eine alternative Ausführungsform anzugeben, die sich insbesondere durch eine konstruktiv einfache Lösung auszeichnet, die zudem das zuverlässige Einstellen einer exakten Mischtemperatur ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken bei einem an sich bekannten Getränkeautomaten mit einem Hauptstrompfad und einem Nebenstrompfad im Nebenstrompfad eine Nebenstrompumpe anzuordnen und über diese eine Zumischmenge an kaltem Wasser exakt zu dosieren. Der Hauptstrompfad führt dabei über eine Heizeinrichtung, beispielsweise einen Durchlauferhitzer, wogegen der Nebenstrompfad diese Heizeinrichtung umgeht, in dem er stromauf der Heizeinrichtung aus dem Hauptstrompfad abzweigt.

Eingangsseitig ist dabei der Hauptstrompfad mit einem Wassertank oder einer Verbindung zu einer Wasserversorgung aus einem Leitungsnetz und ausgangsseitig mit einer Ausgabestelle verbunden, wobei zwischen dem Wassertank / Leitungsnetz und der Heizeinrichtung eine Hauptstrompumpe im Hauptstrompfad angeordnet sind. Die erfindungsgemäße Lösung sieht somit vor, im Nebenstrompfad anstelle der bisher dort möglichen Blende bzw. anstelle des bisher dort möglichen Ventils eine Pumpe, hier eine Nebenstrompumpe anzuordnen, die kälteres und aus dem Wassertank / Leitungsnetz stammendes Zumischwasser fördert. Die Nebenstrompumpe kann abhängig vom gewählten Produkt, dem sich einstellenden Fluss oder der Temperatur am Eingang des Hauptstrompfads bzw. an der Ausgabestelle angesteuert werden. Wird die Nebenstrompumpe nicht angesteuert, gelangt sämtliches Wasser über den Hauptstrompfad, wobei selbstverständlich auch denkbar ist, einen gewissen Grundnebenstrom über einen Bypass einzustellen, der die Nebenstrompumpe umgeht und in welchem beispielsweise eine Drosseleinrichtung, insbesondere eine Blende, angeordnet ist. Als wesentlicher Vorteil bei der erfindungsgemäßen Lösung lässt sich nennen, dass durch den geringen Druckunterschied zwischen Haupt- und Nebenstrompfad bei bekannter Pumpenkennlinie eine Zumischwassermenge exakt steuerbar ist. Insbesondere bei der Verwendung einer Zahnradpumpe oder einer Schwingankerpumpe. Durch die aktive Reaktion der Nebenstrompumpe kann zudem schnell ein definierter Durchfluss aufgebaut werden, wobei durch eine entsprechende Veränderung der Förderleistung der Nebenstrompumpe individuelle Mischtemperaturen an der Ausgabestelle /Mischbereich gezielt erzeugt werden können. Prinzipiell ist eine derartige Nebenstrompumpe auch kostengünstiger herzustellen als beispielsweise ein 2/2-Magnetventil, so dass die erfindungsgemäße Lösung zudem wirtschaftlich ist.

Bei einer vorteilhaften Weiterbildung der erfindungsgemäßen Lösung, ist insbesondere die Nebenstrompumpe beispielsweise als Flügelzellenpumpe, als Zahnradpumpe oder als Schwingankerpumpe ausgebildet. Schwingankerpumpen stellen dabei eine sehr einfache aber äußerst zuverlässige Bauform einer Membranpumpe dar. Als Antrieb dient eine mit Wechselspannung beaufschlagte Spule, deren Magnetfeld auf einen schwingend gelagerten Hebel, nämlich den Anker, wirkt. Das Ende des Hebels wirkt auf eine Membran, wobei die Schwingankerpumpe üblicherweise mit der Frequenz der Wechselspannung, mit welcher sie betrieben wird, arbeitet. Ein besonders guter Wirkungsgrad erzielt eine derartige Schwingankerpumpe insbesondere dann, wenn die Eigenfrequenz des Ankers auf die Wechselstromfrequenz abgestimmt ist, so dass die Nebenstrompumpe bzw. die Schwingankerpumpe in Resonanz arbeitet. Aufgrund der wenig bewegten Teile können derartige Schwingankerpumpen hohe Standzeiten erreichen und zugleich äußerst leise arbeiten, was insbesondere für moderne Getränkeautomaten von besonderem Vorteil ist.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

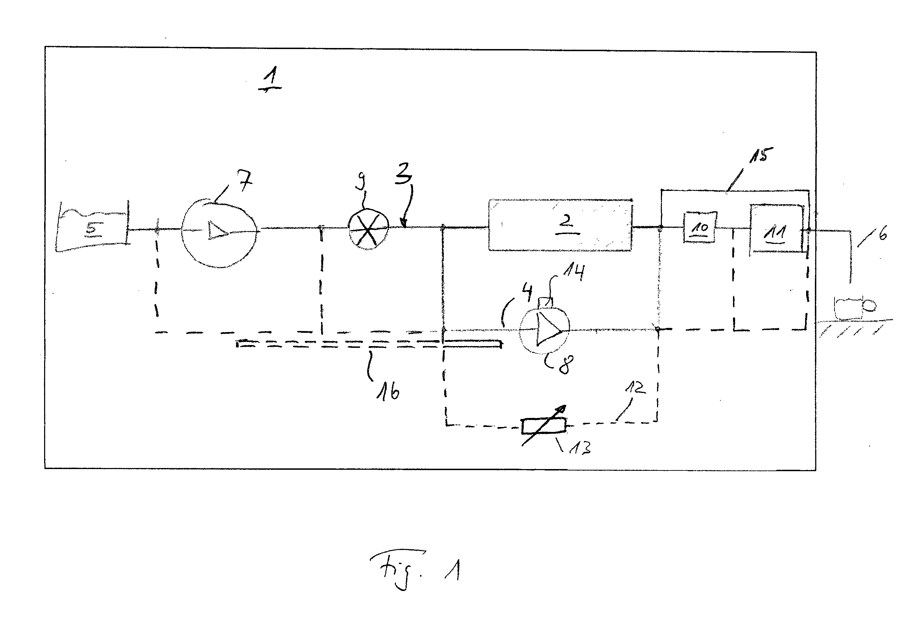

Die einzige Fig. 1 zeigt eine mögliche Ausführungsform eines erfindungsgemäßen Getränkeautomatens.

Entsprechend der Fig. 1, weist ein erfindungsgemäßer Getränkeautomat 1, der beispielsweise als Kaffeeautomat ausgebildet sein kann, einen durch eine Heizeinrichtung 2 führenden Hauptstrompfad 3 sowie einen die Heizeinrichtung 2 umgehenden Nebenstrompfad 4 auf. Der Nebenstrompfad 4 zweigt dabei stromauf der Heizeinrichtung 2 aus dem Hauptstrompfad 3 ab, wobei der Hauptstrompfad 3 seinerseits eingangsseitig mit einem Wassertank 5 /Leitungsnetz und ausgangsseitig mit einer Ausgabestelle 6 verbunden ist. Zwischen dem Wassertank 5 und der Heizeinrichtung 2 ist dabei eine Hauptstrompumpe 7 im Hauptstrompfad 3 angeordnet. Erfindungsgemäß ist nun im Nebenstrompfad 4 eine Nebenstrompumpe 8 angeordnet und zwar anstelle eines dort bisher oftmals angeordneten Ventils oder einer bisher dort angeordneten Blende.

Im Hauptstrompfad 3 sind stromab der Hauptstrompumpe 7 ein Mengenmesser 9 und stromab der Heizeinrichtung 2 ein Brühventil 10 sowie eine Brüheinrichtung 11 angeordnet. Dabei ist denkbar, dass der Nebenstrompfad 4 zwischen dem Wassertank 5 und der Hauptstrompumpe 7 aus dem Hauptstrompfad 3 abzweigt oder dass der Nebenstrompfad 4 zwischen der Hauptstrompumpe 7 und den Mengenmessern 9 aus dem Hauptstrompfad 3 abzweigt oder dass der Nebenstrompfad 4 zwischen dem Mengenmesser 9 und der Heizeinrichtung 3 aus dem Hauptstrompfad 3 abzweigt.

Ein Zurückführen des Nebenstrompfades 4 in den Hauptstrompfad 3 erfolgt dabei vorzugsweise alternativ zwischen der Heizeinrichtung 2 und dem Brühventil 10 oder stromab der Brüheinrichtung 11, wobei sowohl für ein Abzweigen aus dem Hauptstrompfad 3 als auch für ein Zurückführen in den Hauptstrompfad 3 Alternativpositionen mit einer unterbrochen gezeichneten Linie dargestellt sind.

Optional kann zudem ein die Heizeinrichtung 2 und die Nebenstrompumpe 8 umgehender Bypass 12 vorgesehen sein, in welchem eine Drosseleinrichtung 13, insbesondere eine Blende, angeordnet ist.

Generell können/kann die Nebenstrompumpe 8 und/oder die Hauptstrompumpe 7 als Flügelzellenpumpe, als Zahnradpumpe oder als Schwingankerpumpe ausgebildet sein, wobei insbesondere die zuletzt erwähnte Alternative eine kostengünstige und zugleich exakt steuerbare Pumpe darstellt. Die Heizeinrichtung 2 kann beispielsweise als gängiger Durchlauferhitzer ausgebildet sein.

Darüber hinaus kann eine Steuereinrichtung 14 vorgesehen sein, die die Nebenstrompumpe 8 in Abhängigkeit einer Durchflussmenge, einer Getränketemperatur an der Ausgabestelle 6 oder einer Wassertemperatur im Wassertank 5 steuert/regelt.

Durch den geringen Druckunterschied im Hauptstrompfad 3 und im Nebenstrompfad 4 lässt sich bei bekannter Pumpenkennlinie insbesondere die Verwendung einer Zahnradpumpe oder einer Schwingankerpumpe die Zumischwassermenge sehr exakt steuern. Darüber hinaus kann durch die aktiven Reaktionen der Nebenstrompumpe 8 schnell ein definierter Durchfluss aufgebaut werden. Bei bekanntem Gesamtdurchfluss, der beispielsweise über den Mengenmesser 9 erfasst werden kann, kann auch der Mischungsanteil und damit die Zumischmenge der Nebenstrompumpe 8 exakt gesteuert werden. Durch eine Veränderung der Förderleistung an der Nebenstrompumpe 8 oder einer Taktung dieser Nebenstrompumpe 8 können darüber hinaus unterschiedliche Mischtemperaturen gezielt erzeugt und dadurch beispielsweise ein nachgeschaltetes Sensorelement (nicht gezeigt) geregelt werden.

Denkbar ist darüber hinaus, den Nebenstrompfad 4 vorzuwärmen und damit z.B. Pausenkompensationen zu erzeugen und/oder eine Entkalkerflüssigkeit in der Heizeinrichtung 2 durch die Nebenstrompumpe 8 in Bewegung zu halten und damit ein Entkalkungsergebnis zu verbessern, insbesondere sofern dabei das Brühventil 10 nicht angesteuert wird. Zum zumindest bereichsweise Erwärmen des Nebenstrompfades 4 kann beispielsweise eine weitere Heizeinrichtung 16 vorgesehen sein.

Zur Vereinfachung der Ansteuerung kann die Nebenstrompumpe 8 unter den vorliegenden Druckverhältnissen gerade die Menge oder geringfügig mehr Menge an Bypasswasser fördern, welche notwendig ist, um die geringste geforderte Mischtemperatur zu erhalten. Damit könnte bei einem gewünschten kühlen Getränk die Nebenstrompumpe 8 dauerhaft angesteuert werden. Denkbar ist aber auch, das Zumischwasser über die Nebenstrompumpe 8 erst nach dem eigentlichen Brühprozess in einem Postmix direkt im Bereich der Ausgabestelle 6 zuzumischen, was gemäß der Fig. 1 mit unterbrochen gezeichneter Linie eingezeichnet ist.

Bei der gemäß der Fig. 1 gezeigten Ausführungsvariante sind der Druckunterschied zwischen dem Nebenstrompfad 4 und dem Hauptstrompfad 3 sowie die Druckdifferenz vor und nach der Heizeinrichtung 2 vergleichsweise gering, weshalb die Nebenstrompumpe 4 generell mit sehr niedrigem Druck /niedriger Druckerhöhung arbeiten kann. Wird die Nebenstrompumpe 4 zudem als Zahnradpumpe oder als Flügelzellenpumpe oder aber als Schwingankerpumpe gefertigt, so ist darüber hinaus eine kostengünstige Fertigung im Vergleich zu bisher dort eingesetzten Magnetventilen erreichbar. Durch jegliche Ausführungsformen der Nebenstrompumpe 8 ist zudem ein definierter Durchfluss über den Nebenstrompfad 4 erzeugbar auch bei gleichzeitig anstehendem Hauptstrom im Hauptstrompfad 3.

Generell ist auch eine Bereitstellung von Teewasser möglich, wobei dann ein Pfad 15 gewählt wird, der die Brüheinrichtung 11 und das Brühventil 10 umgeht und direkt von der Heizeinrichtung 2 zur Mischstelle/Getränkeausgabe 6 führt.

Über die Drosseleinrichtung 13 kann bei nicht angesteuerter Nebenstrompumpe 4 ein gewisser Grundnebenpfad die Heizeinrichtung 2 umgehen, wobei selbstverständlich auch denkbar ist, dass bei nicht angesteuerter Nebenstrompumpe 4 und geschlossener Drosseleinrichtung 13 der gesamt Durchfluss über den Hauptstrompfad 3 erfolgt. Ebenso ist denkbar, dass bei alleinigem Betrieb der Nebenstrompumpe 8, das heißt ohne Hauptstrompumpe 7 und ohne Wasser durch die Heizeinrichtung zu fördern, eine Ausführungsform der Kaltbrühung möglich ist.

## Patentansprüche

1. Getränkeautomat (1), insbesondere ein Kaffeeautomat, mit einem durch eine Heizeinrichtung (2) führenden Hauptstrompfad (3) und einem die Heizeinrichtung (2) umgehenden Nebenstrompfad (4), wobei
- der Nebenstrompfad (4) stromauf der Heizeinrichtung (2) aus dem Hauptstrompfad (3) abzweigt,
- der Hauptstrompfad (3) eingangseitig mit einem Wassertank (5) / Leitungsnetz und ausgangsseitig mit einer Ausgabestelle (6) verbunden ist,
- zwischen dem Wassertank (5) und der Heizeinrichtung (2) eine Hauptstrompumpe (7) im Hauptstrompfad (3) angeordnet ist,
- im Nebenstrompfad (4) eine Nebenstrompumpe (8) angeordnet ist,
**dadurch gekennzeichnet,**
**dass** eine Steuereinrichtung (14) vorgesehen ist, die die Nebenstrompumpe (4) in Abhängigkeit einer Durchflussmenge, einer Getränketemperatur an der Ausgabestelle (6) oder einer Wassertemperatur im Wassertank (5) steuert/regelt.

2. Getränkeautomat nach Anspruch 1,
**dadurch gekennzeichnet,**
**dass** im Hauptstrompfad (3) stromab oder stromauf der Hauptstrompumpe (7) ein Mengenmesser (9) und stromab der Heizeinrichtung (2) ein Brühventil (10) und eine Brüheinrichtung (11) angeordnet sind.

3. Getränkeautomat nach Anspruch 2,
**dadurch gekennzeichnet,**
- **dass** der Nebenstrompfad (4) zwischen dem Wassertank (5) / Leitungsnetz und der Hauptstrompumpe (7) aus dem Hauptstrompfad (3) abzweigt, oder
- **dass** der Nebenstrompfad (4) zwischen der Hauptstrompumpe (7) und dem Mengenmesser (9) aus dem Hauptstrompfad (3) abzweigt, oder
- **dass** der Nebenstrompfad (4) zwischen dem Mengenmesser (9) und der Heizeinrichtung (2) aus dem Hauptstrompfad (3) abzweigt.

4. Getränkeautomat nach Anspruch 2 oder 3,
**dadurch gekennzeichnet,**
- **dass** der Nebenstrompfad (4) zwischen der Heizeinrichtung (2) und dem Brühventil (10) wieder in den Hauptstrompfad (3) zurückführt, oder
- **dass** der Nebenstrompfad (4) stromab des Brühventils (10) wieder in den Hauptstrompfad (3) zurückführt.

5. Getränkeautomat nach einem der Ansprüche 2 bis 4,
**dadurch gekennzeichnet,**
**dass** ein die Heizeinrichtung (2) und die Nebenstrompumpe (8) umgehender Bypass (12) vorgesehen ist, in welchem eine Drosseleinrichtung (13), insbesondere eine Blende, angeordnet ist.

6. Getränkeautomat nach einem der Ansprüche 1 bis 5,
**dadurch gekennzeichnet,**
**dass** die Nebenstrompumpe (8) und/oder die Hauptstrompumpe (7) als Flügelzellenpumpe, als Zahnradpumpe oder als Schwingankerpumpe ausgebildet sind/ist.

7. Getränkeautomat nach einem der Ansprüche 1 bis 6,
**dadurch gekennzeichnet,**
**dass** die Heizeinrichtung (2) als Durchlauferhitzer oder als Boiler ausgebildet ist.

## Claims

1. A beverage machine (1), in particular a coffee machine, comprising a main flow path (3), which leads through a heating device (2), and an auxiliary flow path (4), which bypasses the heating device (2), wherein
- the auxiliary flow path (4) branches off from the main flow path (3) upstream of the heating device (2),
- the main flow path (3) is connected to a water tank (5)/line network on the input side and to a dispensing location (6) on the output side,
- a main flow pump (7) is arranged in the main flow path (3) between the water tank (5) and the heating device (2),
- an auxiliary flow pump (8) is arranged in the auxiliary flow path (4),
**characterized in**
**that** provision is made for a control device (14), which controls/regulates the auxiliary flow pump (4) as a function of a rate of flow, a beverage temperature at the dispensing location (6) or a water temperature in the water tank (5).

2. The beverage machine according to claim 1, **characterized in that** a fluid flow meter (9) is arranged in the main flow path (3) downstream from or upstream of the main flow pump (7) and **in that** a brewing valve (10) and a brewing device (11) are arranged downstream from the heating device (2).

3. The beverage machine according to claim 2,
**characterized in**
- **that** the auxiliary flow path (4) between the water tank (5)/line network and the main flow pump (7) branches off from the main flow path (3), or
- **that** the auxiliary flow path (4) branches off from the main flow path (3) between the main flow pump (7) and the fluid flow meter (9), or
- **that** the auxiliary flow path (4) branches off from the main flow path (3) between the fluid flow meter (9) and the heating device (2).

4. The beverage machine according to claim 2 or 3,
**characterized in**
- **that** the auxiliary flow path (4) leads back into the main flow path (3) between the heating device (2) and the brewing valve (10), or
- **that** the auxiliary flow path (4) leads back into the main flow path (3) downstream from the brewing valve (10).

5. The beverage machine according to one of claims 2 to 4, **characterized in that** provision is made for a bypass (12), which bypasses the heating device (2) and the auxiliary flow pump (8) and in which a throttle device (13), in particular a bezel, is arranged.

6. The beverage machine according to one of claims 1 to 5, **characterized in that** the auxiliary flow pump (8) and/or the main flow pump (7) are/is embodied as vane-type pump, as toothed wheel pump or as magnetic piston pump.

7. The beverage machine according to one of claims 1 to 6, **characterized in that** the heating device (2) is embodied as continuous-flow water heater or as boiler.

## Revendications

1. Distributeur de boissons (1), notamment distributeur de café avec un circuit principal (3) d'écoulement menant à travers un système de chauffage (2) et un circuit secondaire (4) d'écoulement contournant le système de chauffage (2),
- en amont du système de chauffage (2), le circuit secondaire (4) d'écoulement dérivant à partir du circuit principal (3) d'écoulement,
- le circuit principal (3) d'écoulement étant relié du côté entrée avec un réservoir d'eau (5) / un réseau de conduits et du côté sortie avec un point de distribution (6),
- entre le réservoir d'eau (5) et le système de chauffage (2), une pompe (7) d'écoulement principal étant placée dans le circuit principal (3) d'écoulement,
- une pompe (4) d'écoulement secondaire étant placée dans le circuit secondaire (4) d'écoulement,
**caractérisé en ce qu'**il est prévu un système de commande (14) qui commande/règle la pompe (4) d'écoulement secondaire en fonction d'un débit, d'une température de boisson au point de distribution (6) ou d'une température de l'eau dans le réservoir d'eau (5).

2. Distributeur de boissons selon la revendication 1, **caractérisé en ce que** dans le circuit principal (3) d'écoulement, en aval ou en amont de la pompe (7) d'écoulement principal est placé un débitmètre (9) et en aval du système de chauffage (2) sont placés une valve d'infusion (10) et un dispositif d'infusion (11).

3. Distributeur de boissons selon la revendication 2, **caractérisé**
- **en ce qu'**entre le réservoir d'eau (5) / le réseau de conduits et la pompe (7) d'écoulement principal, le circuit secondaire (4) d'écoulement dérive hors du circuit principal (3) d'écoulement ou
- **en ce qu'**entre la pompe (7) d'écoulement principal et le débitmètre (9), le circuit secondaire (4) d'écoulement dérive hors du circuit principal (3) d'écoulement ou
- **en ce qu'**entre le débitmètre (9) et le système de chauffage (2), le circuit secondaire (4) d'écoulement dérive hors du circuit principal (3) d'écoulement.

4. Distributeur de boissons selon la revendication 2 ou la revendication 3, **caractérisé**
- **en ce qu'**entre le système de chauffage (2) et la valve d'infusion (10), le circuit secondaire (4) d'écoulement retourne dans le circuit principal (3) d' écoulement ou
- **en ce qu'** en aval de la valve d'infusion (10), le circuit secondaire (4) d'écoulement retourne dans le circuit principal (3) d'écoulement.

5. Distributeur de boissons selon l'une quelconque des revendications 2 à 4, **caractérisé en ce qu'**il est prévu une dérivation (12) contournant le système de chauffage (2) et la pompe (8) d'écoulement secondaire, dans laquelle est prévu un système d'étranglement (13), notamment un obturateur.

6. Distributeur de boissons selon l'une quelconque des revendications 1 à 5, **caractérisé en ce que** la pompe (8) d'écoulement secondaire et/ou la pompe (7) d'écoulement principal est/sont conçue(s) en tant que pompe à palettes, en tant que pompe à engrenage ou en tant que pompe vibrante.

7. Distributeur de boissons selon l'une quelconque des revendications 1 à 6, **caractérisé en ce que** le système de chauffage (2) est conçu en tant que chauffe-eau instantané ou que ballon d'eau chaude.
